# EUROPÄISCHE PATENTSCHRIFT

(11) **EP 4 407 865 B1**
(45) Veröffentlichungstag und Bekanntmachung des Hinweises auf die Patenterteilung: **22.10.2025**
(21) Anmeldenummer: 24151858.8
(22) Anmeldetag: 15.01.2024
(51) Int. Cl.: H02S 20/24, H02S 30/00, F24S 25/33, F24S 25/35

(54) **PHOTOVOLTAIK-MONTAGESYSTEM**
PHOTOVOLTAIC MOUNTING SYSTEM
SYSTÈME DE MONTAGE PHOTOVOLTAÏQUE

(30) Priorität: 27.01.2023 DE 102023102032
(43) Veröffentlichungstag der Anmeldung: 31.07.2024
(73) Patentinhaber: Renusol Europe GmbH, 51063 Köln (DE)
(72) Erfinder: BALEN, Marko, 24257 Schwartbuck (DE); HECK, Dieter, 53579 Erpel (DE); ROSSBACH, Nils, 51103 Köln (DE); SCHUMACHER, Christian, 50733 Köln (DE); SCHWARZ, Thomas, 53809 Ruppichteroth (DE); STEUER, Sven, 51766 Engelskirchen (DE)
(74) Vertreter: Patentanwälte Bauer Vorberg Kayser

(56) Entgegenhaltungen:
- US-A1- 2012 234 377
- US-A1- 2013 111 713

## Beschreibung

Die Erfindung betrifft ein Photovoltaik-Montagesystem gemäß Patentanspruch 1. Ferner betrifft die Erfindung ein Verbindungselement bzw. eine Traufstütze gemäß Patentanspruch 7.

Zur Anordnung von Photovoltaik-Modulen (PV-Modulen) auf Flachdächern werden üblicherweise Schienen verwendet, um die Photovoltaik-Module auf den Flachdächern zu positionieren und zu befestigen. Dabei ist es bekannt, Schienen in mehreren Reihen anzuordnen und in einer Reihe mehrere Schienen hintereinander. Die Schienen werden miteinander verbunden, um so eine Art Schachbrettmuster aus parallelen Schienen und dazu quer verlaufenden Verbindungsstücken bzw. Modulen zu erzeugen. Als Verbindungselement sind dabei aus dem Stand der Technik starre Elemente bekannt. Insgesamt entstehen dadurch flexible, aber biegesteife Systeme. Solche miteinander verbundenen Systeme weisen insgesamt eine hohe Steifigkeit auf und sind z.B. gegenüber Windeinwirkungen weniger anfällig. Das Dokument US 2012/234377 A1 zeigt eine solche Anordnung auf**.**

Die zugrundliegende Aufgabe der Erfindung ist es, ein Photovoltaik-Montagesystem und ein Verbindungselement bzw. ein Traufstütze zur Verfügung zu stellen, mittels welchen eine stabile und sichere Anordnung von Photovoltaik-Modulen auf unebenen Flachdächern ermöglicht wird.

Die Lösung der Aufgabe erfolgt erfindungsgemäß mit den Merkmalen der unabhängigen Ansprüche 1 und 7. Weitere praktische Vorteile und Ausführungsformen sind in Zusammenhang mit den abhängigen Ansprüchen beschrieben.

Ein erfindungsgemäßes Photovoltaik-Montagesystem umfasst mindestens zwei Schienen zur Positionierung und Anbindung von Photovoltaikmodulen, wobei hier mindestens zwei Schienen in Längsrichtung betrachtet hintereinander angeordnet sind. Die Schienen liegen insbesondere direkt auf einem Flachdach auf.

Die beiden hintereinander angeordneten Schienen sind durch ein Verbindungselement bzw. eine Traufstütze miteinander verbunden. Das Verbindungselement weist einen Grundkörper auf, mit einem einen ersten Anbindungsabschnitt, welcher in der ersten Schiene aufgenommen ist. Dabei ist der erste Anbindungsabschnitt in der ersten Schiene in dem Zwischenraum zwischen zwei Seitenwänden der Schiene angeordnet. Ferner weist der Grundkörper einen zweiten Anbindungsabschnitt auf, welcher auf analog in der zweiten Schiene aufgenommen ist.

Erfindungsgemäß ist die Unterseite des Grundkörpers in dem jeweiligen Anbindungsabschnitt konvex gekrümmt, so dass die Unterseite des Grundkörpers insgesamt einen wellenförmigen Verlauf aufweist. Die Unterseite des Grundkörpers ist jeweils im Anbindungsabschnitt in Richtung der Schiene gewölbt.

Wenn eine Schiene gegenüber der anderen Schiene geneigt ist oder relativ zu der anderen Schiene einen Höhenversatz aufweist, kann sich - durch die zwei an ihrer Unterseite konvex ausgebildeten Anbindungsabschnitte - die jeweilige Schiene, tangential an den jeweiligen konvexen Bereich anlegen und so in ihrer Ausrichtung verbleiben. Die Kontaktpositionen, in welchen die Schiene an der Unterseite an dem jeweiligen Anbindungsabschnitt ist durch die Krümmung auf der Unterseite flexibel und passt sich je nach relativer Ausrichtung der Schienen an. Durch ein entsprechend gestaltetes Verbindungselement können somit Unebenheiten eines Flachdachs ausgeglichen werden.

Bei dem Verbindungselement handelt es sich aber weiterhin um ein starres und damit biegesteifes Element, welches die Biegesteifigkeit des gesamten Montagesystems nicht negativ beeinflusst. Das System ist also weiterhin sehr stabil gegenüber angreifenden Kräften (z.B. durch Wind). Es kann insbesondere die Menge an Ballast reduziert werden, die zur Beschwerung solcher Systeme regelmäßig benötigt wird. Weiterhin ist die biegesteife, aber trotzdem ausgleichende Verbindung von zwei Schienen auch im Hinblick auf die punktuelle Belastung des Flachdachs von Vorteil, da durch ein zusammenhängendes biegesteifes System bei einem Anheben einer Schiene nicht die ganze Kraft über das Ende der Schiene in das Flachdach eingetragen wird, sondern über das Verbindungselement die eine Schiene abrollen kann und die Krafteinleitung über die zweite Schiene verteilt wird.

Das Verbindungsstück ist insbesondere so ausgelegt, dass ein Zwischenabschnitt, welcher sich zwischen den beiden Anbindungsabschnitten mit konvexer Unterseite befindet, in einem Freiraum zwischen den zwei Schienen angeordnet ist. Der Zwischenabschnitt bietet die Möglichkeit, dass sich die Schienen bei verschiedenen Neigungen oder Höhen der beiden Schienen an unterschiedlichen Positionen an das Verbindungselement anlegen können und stellt so eine Art "Puffer" dar.

In einer praktischen Ausführungsform des Photovoltaik-Montagesystems ist die erste Schiene mit dem ersten Anbindungsabschnitt verbunden und die zweite Schiene mit dem zweiten Anbindungsabschnitt. Dazu ist jeweils ein Fixierungsmittel, insbesondere eine Schraube, durch jeweils miteinander fluchtende Öffnungen in der Schiene und dem jeweiligen Anbindungsabschnitt gesteckt. Durch die Unterseite mit der welligen Geometrie, wird auch die Anordnung des Fixierungsmittels vereinfacht, da die Öffnungen von Schiene und jeweiligem Anbindungsabschnitt leichter in eine Flucht gebracht werden können.

In einer weiteren praktischen Ausführungsform des Photovoltaik-Montagesystems verläuft die Oberseite des Grundkörpers in einem Winkel zur Unterseite. Die Neigung der Unterseite wird dabei hier durch eine gedachte Verbindungslinie durch die jeweils innenliegenden Bereiche der Unterseite bestimmt.

Insbesondere weist mindestens ein Anbindungsabschnitt und insbesondere beide Anbindungsabschnitte an der korrespondierenden Oberseite eine senkrecht zu der jeweiligen Schiene verlaufende Schienenstruktur auf.

Zur Anordnung eines Photovoltaik-Moduls ist an der Oberseite des Grundkörpers insbesondere ein Anschlag ausgebildet.

Die Erfindung betrifft auch ein Verbindungselement bzw. eine Traufstütze für ein wie vorstehend beschriebenes Photovoltaik-Montagesystem zur Verbindung zweier hintereinander angeordneter Schienen. Das Verbindungselement weist einen Grundkörper mit einem ersten Anbindungsabschnitt zur Aufnahme in einer ersten Schiene und einem zweiten Anbindungsabschnitt zur Aufnahme in einer zweiten Schiene auf. Die Unterseite des Grundkörpers ist in dem jeweiligen Anbindungsabschnitt konvex gekrümmt, so dass der Grundkörper insgesamt eine wellenförmige Unterseite aufweist. Insbesondere ist der Grundkörper einstückig ausgebildet, insbesondere aus Aluminium oder Stahl. Der Grundkörper ist biegesteif ausgebildet. Es kann sich bei dem Verbindungselement um eine Hohlkörperstruktur handeln, welche z.B. kostengünstig als Tiefziehteil herstellbar ist.

In Bezug auf die Vorteile eines solchen Verbindungselements bzw. Traufstütze wird auf die vorstehende Beschreibung verwiesen.

Insbesondere verläuft bei dem Verbindungselement bzw. der Traufstütze die Oberseite schräg zur Unterseite, sodass der erste Anbindungsabschnitt und der zweite Anbindungsabschnitt eine unterschiedliche Höhe aufweisen. Insbesondere können an der Oberseite noch Schienenstrukturen ausgebildet sein. Ferner kann an der Oberseite ein Anschlag zur Fixierung eines PV-Moduls ausgebildet sein.

In einer praktischen des Verbindungselementes bzw. Traufstütze weist jeder Anbindungsabschnitt eine Öffnung zur Durchführung eines Fixiermittels auf. Die Öffnung ist dabei insbesondere mittig des jeweiligen Anbindungsabschnittes ausgebildet und erstreckt sich in Verlängerung des Scheitelpunktes der konvexen Unterseite.

Weitere praktische Vorteile und Ausführungsformen sind im Folgenden in Verbindung mit den Figuren erläutert. Es zeigen:
- Fig. 1: ein Photovoltaik-Montagesystem mit mehreren Schienen und Photovoltaik-Modulen gemäß Stand der Technik,
- Fig. 2: ein Verbindungselement bzw. eine Traufstütze in einer perspektivischen Ansicht,
- Fig. 3: ein Photovoltaik-Montagesystem mit zwei hintereinander angeordneten Schienen und einem Verbindungselement gemäß Fig. 2 in einem Schnitt gemäß Schnittlinie III-III aus Fig. 5,
- Fig. 4: das Photovoltaik-Montagesystem aus Fig. 3 in einer Seitenansicht,
- Fig. 5: das Photovoltaik-Montagesystem aus Fig. 3 und 4 in einer Draufsicht,
- Fig. 6: das Photovoltaik-Montagesystem aus Fig. 3 bis 6 mit zwei einen Höhenversatz aufweisenden Schienen und
- Fig. 7: das Photovoltaik-Montagesystem aus Fig. 3 bis 6 mit zwei relativ zueinander geneigten Schienen.

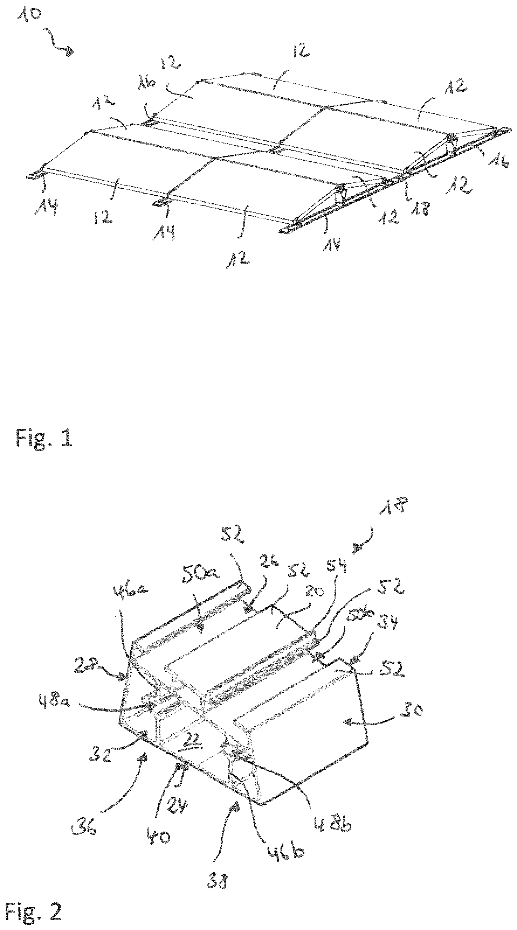

In Fig. 1 ist ein Photovoltaik-Montagesystem 10 gemäß Stand der Technik dargestellt, welches zur Anordnung von PV-Modulen 12 auf einem Flachdach dient. Das Photovoltaik-Montagesystem 10 umfasst hier drei Reihen an Schienen 14, 16, wobei jeweils zwei Schienen 14, 16 in einer Reihe hintereinander angeordnet sind und mittels eines Verbindungselementes 18 verbunden sind. Zwischen zwei Schienen 14 oder 16 sind die PV-Module 12 angeordnet. Insgesamt ergibt sich damit ein schachbrettartiges Muster.

In Fig. 2 ist ein Verbindungselement 18 bzw. eine Traufstütze gezeigt. Das Verbindungselement 18 weist einen Grundkörper 20 auf, welcher hier als Hohlkörper mit einem Hohlraum 22 ausgebildet ist. Der Grundkörper 20 weist eine Unterseite 24, eine Oberseite 26, eine Vorderseite 28, eine Rückseite 30 und zwei offene Seitenflächen 32, 34 auf. In einer Seitenansicht weist der Grundkörper 20 eine trapezförmige Geometrie auf.

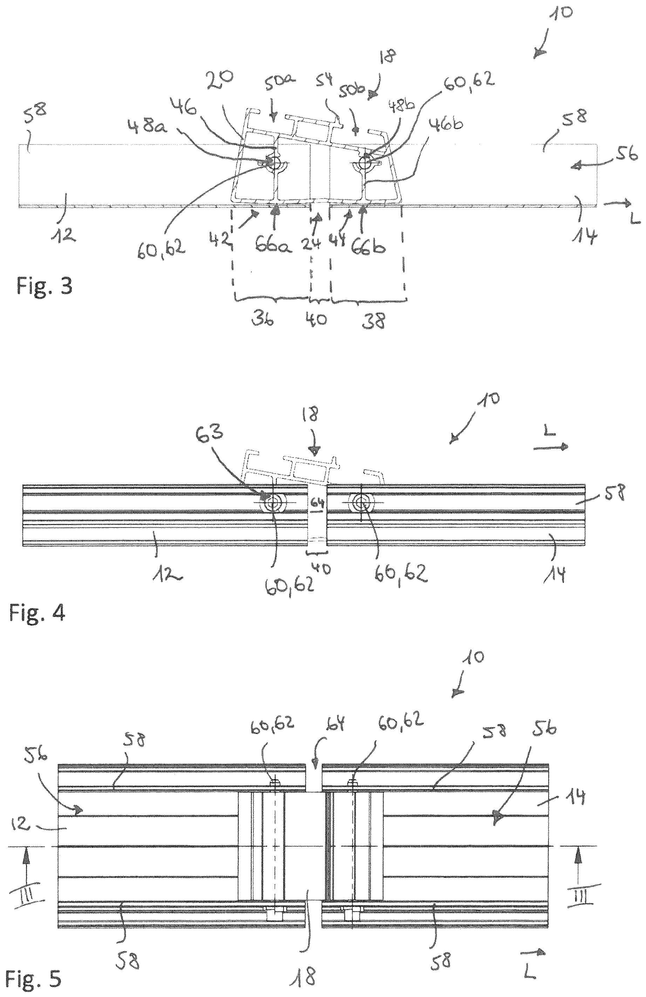

Der Grundkörper 20 weist einen ersten Anbindungsabschnitt 36 zur Anordnung in einer ersten Schiene 14 und einen zweiten Anbindungsabschnitt 38 zur Anordnung in einer zweiten Schiene 16 auf (vgl. Fig. 3 bis 7). Zwischen dem ersten Anbindungsabschnitt 36 und dem zweiten Anbindungsabschnitt 38 ist ein Zwischenabschnitt 40 ausgebildet.

Die Unterseite 42 des ersten Anbindungsabschnittes 36 und die Unterseite 44 des zweiten Anbindungsabschnittes 38 sind jeweils konvex gekrümmt, sodass sich insgesamt ein wellenförmiger Verlauf der Unterseite 24 des Grundkörpers 20 ergibt.

Die Oberseite 26 des Grundkörpers 20 verläuft schräg zur Unterseite 24, sodass der Grundkörper 20 hier im zweiten Anbindungsabschnitt 38 eine geringe Höhe aufweist als im ersten Anbindungsabschnitt 36.

Jeweils im ersten Anbindungsabschnitt 36 und im zweiten Anbindungsabschnitt 38 erstreckt sich eine Längsstrebe 46a, 46b durch den Hohlraum 22. Die Längsstreben 46a, 46b erstreckt sich jeweils von der Unterseite 24 zur Oberseite 26. Die Längsstreben 46a, 46b umgeben jeweils eine Öffnung 48a, 48b zur Durchführung eines Fixierungsmittels (vgl. Fig. 3 bis 6). Die Öffnungen 48a, 48b sind dabei nur teilweise von der jeweiligen Längsstrebe 46a, 46b umgeben.

Auf der Oberseite 26 der jeweiligen Anbindungsabschnitte 36, 38 ist jeweils eine Schienenstruktur 50a, 50b ausgebildet. Die Schienenstruktur 50a, 50b ist hier durch jeweils winklige Rippen 52 gebildet. Die Schienenstrukturen 50a, 50b sind jeweils in Querrichtung des Grundkörpers 20 ausgebildet.

Ferner ist auf der Oberseite 26 des Grundkörper 20 und hier auf einer winkligen Rippe 52 ein Anschlag 54 ausgebildet.

Im Folgenden wird in Verbindung mit den Figuren 3 bis 6 die Funktionsweise des Verbindungselementes 18 bzw. der Traufstütze erläutert.

In den Fig. 3 bis 6 ist jeweils ein Photovoltaik-Montagesystem 10 gezeigt, wobei hier zwei Schienen 14, 16 hintereinander in einer Längsrichtung L angeordnet sind, und wobei die beiden Schienen 14, 16 durch das Verbindungselement 18 miteinander verbunden sind.

In den Fig. 3 bis 6 sind die beiden Schienen 14, 16 jeweils waagerecht und auf gleicher Höhe ausgerichtet.

Das Verbindungselement 18 ist derart angeordnet, dass sich der erste Anbindungsabschnitt 36 in der ersten Schiene 14, in einem Zwischenraum 56 zwischen zwei Seitenwänden 58, erstreckt, und der zweite Anbindungsabschnitt 38 analog dazu in der zweiten Schiene 16. Die Schienen 14, 16 sind jeweils mit Schrauben 60 als Fixierungsmittel 62 an dem jeweiligen Anbindungsabschnitt 36, 38 fixiert. Die Schraube ist 60 ist durch miteinander fluchtende Öffnungen in der jeweiligen Schiene und Öffnungen 48a, 48b in dem korrespondierenden Anbindungsabschnitt 36, 38 hindurchragend angeordnet. Der Zwischenabschnitt 40 ist hier in dem Freiraum 64 zwischen den beiden Schienen 14, 16 angeordnet.

Wie in Fig. 3 gut erkennbar ist, liegen die Anbindungsabschnitte 36, 38 jeweils mit ihrer Unterseite 42, 44 an der jeweiligen Schiene 14, 16 an, wobei sich durch die konvexe Krümmung nur ein relativ kleiner Kontaktbereich ergibt. Die jeweiligen Kontaktposition befinden sich hier mittig, in Verlängerung der Längsstrebe 46a, 46b und sind mit Pfeilen 66a, 66b gekennzeichnet.

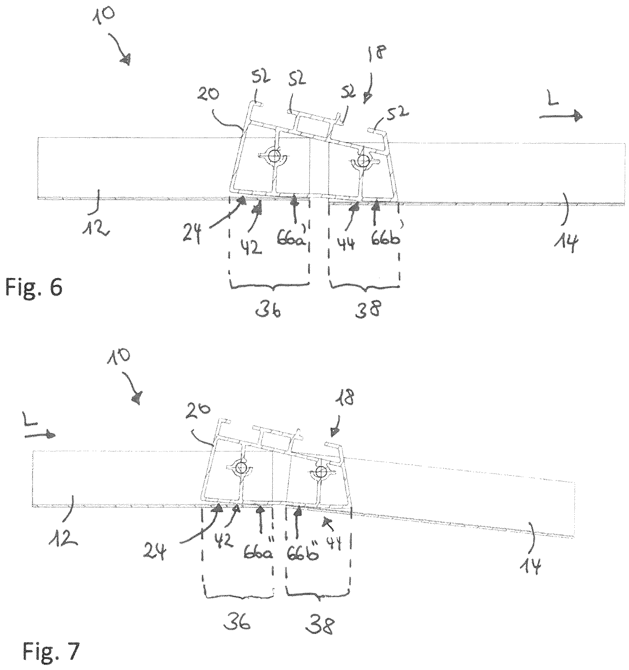

In Fig. 6 sind die beiden Schienen 14, 16 in ihrer Höhe versetzt angeordnet, wie es bei einer Einbausituation auf einem unebenen Flachdach vorkommen kann. Die zweite Schiene 16 ist auf geringere Höhe angeordnet als die erste Schiene 14. Durch die konvexe Unterseite 24 liegen die erste Schiene 14 und die zweite Schiene 16 nun an gegenüber den in Fig. 3 gezeigten Kontaktpositionen 66 verschobenen Kontaktpositionen 66a' und 66b' an. Die Kontaktpositionen 66a' und 66b' sind hier in Richtung der zweiten, tiefer liegenden Schiene 16 verschoben.

In Fig. 7 ist eine weitere Montagesituation dargestellt, wobei hier die zweite Schiene 16 gegenüber der ersten Schiene 14 nach unten geneigt ist. Auch hier sind die Kontaktpositionen 66a" und 66b" gegenüber den ursprünglichen Kontaktpositionen 66a und 66b verschoben. Die Kontaktpositionen 66a" und 66b" in beiden Anbindungsabschnitten 36, 38 sind in Richtung des Zwischenabschnittes 40 verschoben, gegenüber der in Fig. 3 gezeigten Ausgangslage.

### Bezugszeichenliste

- 10: Photovoltaik-Montagesystem
- 12: Photovoltaik-Modul
- 14: erste Schiene
- 16: zweite Schiene
- 18: Verbindungselement
- 20: Grundkörper
- 22: Hohlraum
- 24: Unterseite
- 26: Oberseite
- 28: Vorderseite
- 30: Rückseite
- 32: Seitenfläche
- 34: Seitenfläche
- 36: erster Anbindungsabschnitt
- 38: zweiter Anbindungsabschnitt
- 40: Zwischenabschnitt
- 42: Unterseite (erster Anbindungsabschnitt)
- 44: Unterseite (zweiter Anbindungsabschnitt)
- 46a,b: Längsstrebe
- 48a,b: Öffnung
- 50a,b: Schienenstruktur
- 52: winklige Rippe
- 54: Anschlag
- 56: Zwischenraum
- 58: Seitenwand
- 60: Schraube
- 62: Fixierungsmittel
- 63: Öffnung (Schiene)
- 64: Freiraum
- 66a, 66b: Kontaktposition
- 66a', 66b': Kontaktposition
- 66a", 66b": Kontaktposition
- L: Längsrichtung

## Patentansprüche

1. Photovoltaik-Montagesystem umfassend mindestens zwei Schienen (14, 16) zur Positionierung und Anbindung von Photovoltaikmodulen (12), wobei mindestens zwei Schienen (14, 16) in Längsrichtung (L) betrachtet hintereinander angeordnet sind und durch ein Verbindungselement (18) miteinander verbunden sind,
**dadurch gekennzeichnet, dass**
das Verbindungselement (18) einen Grundkörper (20) aufweist, mit einem einen ersten Anbindungsabschnitt (36), welcher in der ersten Schiene (14) aufgenommen und mit einem zweiten Anbindungsabschnitt (38), welcher in der zweiten Schiene (16) aufgenommen ist, und wobei die Unterseiten (42, 44) der jeweiligen Anbindungsabschnitte (36, 38) konvex gekrümmt sind, so dass die Unterseite (24) des Grundkörpers (20) insgesamt einen wellenförmigen Verlauf aufweist.

2. Photovoltaik-Montagesystem nach dem vorstehenden Anspruch,
**dadurch gekennzeichnet, dass**
zwischen den beiden Anbindungsabschnitten (36, 38) mit den konvex gekrümmten Unterseiten (42, 44) ein Zwischenabschnitt (40) ausgebildet ist, welcher in einem Freiraum (64) zwischen den beiden Schienen (14, 16) angeordnet ist.

3. Photovoltaik-Montagesystem nach einem der vorstehenden Ansprüche,
**dadurch gekennzeichnet, dass**
die erste Schiene (14) mit dem ersten Anbindungsabschnitt (36) verbunden ist und die zweite Schiene (16) mit dem zweiten Anbindungsabschnitt (38), wobei dazu ein Fixierungsmittel (62) durch jeweils miteinander fluchtende Öffnungen (63, 48a, 48b) in der Schiene (14, 16) und dem jeweiligen Anbindungsabschnitt (36, 38) gesteckt ist.

4. Photovoltaik-Montagesystem nach einem der vorstehenden Ansprüche,
**dadurch gekennzeichnet, dass**
die Oberseite (26) in einem Winkel zur Unterseite (24) verläuft.

5. Photovoltaik-Montagesystem nach einem der vorstehenden Ansprüche,
**dadurch gekennzeichnet, dass**
mindestens ein Anbindungsabschnitt (36, 38) an der Oberseite (26) eine senkrecht zu der jeweiligen Schiene (14, 16) verlaufende Schienenstruktur (50a, 50b) aufweist.

6. Photovoltaik-Montagesystem nach einem der vorstehenden Ansprüche,
**dadurch gekennzeichnet, dass**
auf der Oberseite (26) ein Anschlag (54) ausgebildet ist.

7. Verbindungselement bzw. Traufstütze für ein Photovoltaik-Montagesystem (10) zur Verbindung zweier hintereinander angeordneter Schienen (14, 16), mit einem Grundkörper (20) mit einem ersten Anbindungsabschnitt (36) zur Aufnahme in einer ersten Schiene (14) und einem zweiten Anbindungsabschnitt (38) zur Aufnahme in einer zweiten Schiene (16) und wobei die Unterseite (42, 44) in dem jeweiligen Anbindungsabschnitt (36, 38) konvex gekrümmt ist, so dass der Grundkörper (20) insgesamt eine wellenförmige Unterseite (24) aufweist.

8. Verbindungselement bzw. Traufstütze nach dem vorstehenden Anspruch,
**dadurch gekennzeichnet, dass**
die Oberseite (26) schräg zur Unterseite (24) verläuft.

9. Verbindungselement bzw. Traufstütze nach einem der vorstehenden Ansprüche,
**dadurch gekennzeichnet, dass**
jeder Anbindungsabschnitt (36, 28) eine Öffnung (48a, 48b) zur Durchführung eines Fixierungsmittels (62) aufweist.

## Claims

1. A photovoltaic mounting system comprising at least two rails (14, 16) for positioning and connecting photovoltaic modules (12), wherein at least two rails (14, 16), when viewed in the longitudinal direction (L), are arranged one behind the other and are connected to one another by a connection element (18),
**characterised in that**
the connection element (18) has a base body (20) with a first connecting portion (36) which is received in the first rail (14) and with a second connecting portion (38) which is received in the second rail (16), and wherein the lower faces (42, 44) of the respective connecting portions (36, 38) are curved in a convex manner so that the lower face (24) of the base body (20) as a whole has a wave-shaped path.

2. The photovoltaic mounting system according to the preceding claim, **characterised in that** an intermediate portion (40), which is arranged in a free space (64) between the two rails (14, 16), is configured between the two connecting portions (36, 38) with the lower faces (42, 44) which are curved in a convex manner.

3. The photovoltaic mounting system according to one of the preceding claims, **characterised in that** the first rail (14) is connected to the first connecting portion (36) and the second rail (16) is connected to the second connecting portion (38), wherein to this end a fixing means (62) is inserted through openings (63, 48a, 48b) in the rail (14, 16) and the respective connecting portion (36, 38) which are respectively aligned with one another.

4. The photovoltaic mounting system according to one of the preceding claims, **characterised in that** the upper face (26) runs at an angle to the lower face (24).

5. The photovoltaic mounting system according to one of the preceding claims, **characterised in that** at least one connecting portion (36, 38) has on the upper face (26) a rail structure (50a, 50b) running perpendicularly to the respective rail (14, 16).

6. The photovoltaic mounting system according to one of the preceding claims, **characterised in that** a stop (54) is configured on the upper face (26).

7. A connection element or eaves support for a photovoltaic mounting system (10) for connecting two rails (14, 16) arranged one behind the other, with a base body (20) with a first connecting portion (36) for receiving in a first rail (14) and a second connecting portion (38) for receiving in a second rail (16) and wherein the lower face (42, 44) is curved in a convex manner in the respective connecting portion (36, 38) so that the base body (20) as a whole has a wave-shaped lower face (24).

8. The connection element or eaves support according to the preceding claim, **characterised in that** the upper face (26) runs obliquely to the lower face (24).

9. The connection element or eaves support according to one of the preceding claims, **characterised in that** each connecting portion (36, 28) has an opening (48a, 48b) for passing through a fixing means (62).

## Revendications

1. Système de montage photovoltaïque comprenant au moins deux rails (14, 16) pour le positionnement et la connexion de modules photovoltaïques (12), dans lequel au moins deux rails (14, 16) sont disposés l'un derrière l'autre dans la direction longitudinale (L) et reliés entre eux par un élément de liaison (18), **caractérisé en ce que** l'élément de liaison (18) présente un corps de base (20), doté d'une première section de liaison (36), qui est renfermée dans le premier rail (14) et d'une deuxième section de liaison (38), qui est renfermée dans le deuxième rail (16) et dans lequel les faces inférieures (42, 44) des sections de liaison respectives (36, 38) sont incurvées de manière convexe, de sorte que la face inférieure (24) du corps de base (20) présente une forme générale ondulée.

2. Système de montage photovoltaïque selon la revendication précédente, **caractérisé en ce qu'**une section intermédiaire (40) est réalisée entre les deux sections de liaison (36, 38) avec leurs faces inférieures convexes (42, 44), qui est disposée dans un espace libre (64) entre les deux rails (14, 16).

3. Système de montage photovoltaïque selon une des revendications précédentes, **caractérisé en ce que** le premier rail (14) est relié à la première section de liaison (36) et le deuxième rail (16) à la deuxième section de liaison (38), dans lequel à cet effet, un moyen de fixation (62) est inséré à travers des ouvertures (63, 48a, 48b) alignées dans le rail (14, 16) et la section de liaison (36, 38) correspondante.

4. Système de montage photovoltaïque selon une des revendications précédentes, **caractérisé en ce que** la face supérieure (26) s'étend en biais par rapport à la face inférieure (24).

5. Système de montage photovoltaïque selon une des revendications précédentes, **caractérisé en ce qu'**au moins une section de liaison (36, 38) sur la face supérieure (26) présente une structure de rail (50a, 50b) s'étendant perpendiculairement au rail respectif (14, 16).

6. Système de montage photovoltaïque selon une des revendications précédentes, **caractérisé en ce qu'**une butée (54) est réalisée sur la face supérieure (26).

7. Élément de liaison ou support d'avant-toit pour système de montage photovoltaïque (10) permettant de relier deux rails (14, 16) disposés l'un derrière l'autre, comportant un corps de base (20) doté d'une première section de liaison (36) destinée à recevoir un premier rail (14) et d'une deuxième section de liaison (38) destinée à recevoir un deuxième rail (16) et dans lequel la face inférieure (42, 44) de la section de liaison (36, 38) est convexe, de sorte que le corps de base (20) dans son ensemble présente une face inférieure (24) ondulée.

8. Élément de liaison ou support d'avant-toit selon la revendication précédente, **caractérisé en ce que** la face supérieure (26) s'étend obliquement par rapport à la face inférieure (24).

9. Élément de liaison ou support d'avant-toit selon une des revendications précédentes, **caractérisé en ce que** chaque section de liaison (36, 28) présente une ouverture (48a, 48b) pour le passage d'un moyen de fixation (62).
